(19) Europäisches Patentamt
European Patent Office
Office européen des brevets

(11) Veröffentlichungsnummer: **0 342 375 B1**

(12) **EUROPÄISCHE PATENTSCHRIFT**

(45) Veröffentlichungstag der Patentschrift:
25.09.91 Patentblatt 91/39

(51) Int. Cl.$^5$: **G01D 5/245,** G01D 5/249,
G01P 21/02

(21) Anmeldenummer: 89107030.2

(22) Anmeldetag: 19.04.89

(54) Verfahren zur Überwachung von Impulsdrahtsensoren eines Umdrehungsgebers auf Sensorleitungsbruch und Schaltungsanordnung zur Durchführung des Verfahrens.

(30) Priorität: 03.05.88 DE 3815025

(43) Veröffentlichungstag der Anmeldung:
23.11.89 Patentblatt 89/47

(45) Bekanntmachung des Hinweises auf die
Patenterteilung:
25.09.91 Patentblatt 91/39

(84) Benannte Vertragsstaaten:
DE FR GB IT

(56) Entgegenhaltungen:
EP-A- 0 105 086

(56) Entgegenhaltungen:
EP-A- 0 125 413
EP-A- 0 231 474
DE-A- 2 942 891
DE-A- 3 431 841

(73) Patentinhaber: Siemens Aktiengesellschaft
Wittelsbacherplatz 2
W-8000 München 2 (DE)

(72) Erfinder: Donat, Albrecht, Dipl.-Ing.
Meilwaldstrasse 4
W-8526 Bubenreuth (DE)
Erfinder: Drechsel, Wolfgang Dipl.-Ing.(FH)
Freiherr-vom-Stein-Strasse 9
W-8586 Gefrees (DE)

## Beschreibung

Die Erfindung bezieht sich auf ein Verfahren zur Überwachung eines aus n Impulsdrahtsensoren bestehenden, starr mit einem Lagegeber verbundenen Umdrehungsgebers auf Sensorleitungsbruch, wobei jeder Impulsdrahtsensor pro Umdrehung ein Impulssignal und der Lagegeber pro Umdrehung n Sektorsignale erzeugen, wobei jedes Sektorsignal einen der n Sektoren einer Umdrehung kodiert, und auf eine Schaltungsanordnung zur Durchführung des Verfahrens.

Aus der deutschen Offenlegungsschrift DE-OS 3544452 ist eine Einrichtung zur Absolutwegerfassung bekannt, die mit einem über einen vorgegebenen Meßweg eine Vielzahl von Umdrehungen ausführenden Lagegebern versehen ist, wobei der Lagegeber jeweils ein seiner Winkelstellung entsprechendes Lagesignal abgibt. Der Lagegeber ist außerdem starr mit einem Umdrehungsgeber verbunden, der unter Anwendung des Wiegand-Effekts pro Umdrehung eine vorgegebene Anzahl von in ihrer Amplitude geschwindigkeitsunabhängigen Spannungsstößen abgibt. Eine Verarbeitungseinrichtung überlagert die jeweilige Anzahl von Umdrehungen mit der jeweiligen Lage innerhalb einer Umdrehung zu einem Absolutweg. Dadurch ist eine sichere und technisch unkomplizierte Möglichkeit der Absolutwegerfassung über den vollen Meßweg gegeben.

Ein Umdrehungsgeber, der unter Zugrundelegung des Wiegand-Effektes arbeitet, ist aus dem Aufsatz "Theorie und Praxis der Wiegand-Sensoren" von Dr. rer.nat. G. Kuërs, abgedruckt in Sonderdruck "Der Konstrukteur", Januar/Februar, März 1983, Verlag für Technik und Wirtschaft, Wiesbaden, bekannt. Der Vorteil derartiger Sensoren liegt darin, daß diese ohne eine gesonderte Stromversorgungseinrichtung einen Spannungsimpuls liefern, dessen Amplitude im Gegensatz zu denen eines Induktivgebers unabhängig von der Relativgeschwindigkeit zwischen feststehendem und bewegtem Teil des Meßsystems ist. Dabei sind die Impulsdrahtsensoren für einen sehr großen Temperaturbereich einsetzbar. Außerdem besteht ein hoher Signal-/Rauschabstand und die Ausgänge der Impulsdrahtsensoren sind kurzschlußsicher. Bei der Anordnung von Magnet, Wiegand-Draht und zugehöriger Spule eines solches Systems ist es sowohl möglich, daß der Wiegand-Draht beweglich angeordnet und der Magnet mit der Sensorspule ortsfest ist, ebenso kann auch eine Anordnung aus beweglichem Magnet und feststehendem Wiegand-Draht mit zugehöriger Spule vorgesehen sein.

Da bei nur einem Sensor eine Drehrichtung des Umdrehungsgebers nicht erfaßt werden kann, erweist sich eine Anordnung, bestehend aus n Impulsdrahtsensoren, vorzugsweise drei, als vorteilhaft, die über den Umfang des Umdrehungsgebers angeordnet sind. Dadurch erzeugt der Umdrehungsgeber während einer Umdrehung n, vorzugsweise drei, Spannungsstöße bzw. Impulssignale. Jeder Impulsdrahtsensor ist in einem Sektor angeordnet, wobei vom Lagegeber ein korrespondierendes Sektorsignal erzeugt wird.

Beim Einsatz dieser Einrichtung zur Absolutwegerfassung in der Robotertechnik muß sichergestellt werden, daß die erzeugten Signale des Umdrehungsgebers infolge einer Umdrehung entstanden sind und nicht infolge eines Leitungskurzschlusses, damit keine verhängnisvolle Fehlhandlungen sich nachziehen können.

Der Erfindung liegt nun die Aufgabe zugrunde, ein Verfahren zur Überwachung der n Impulsdrahtsensoren eines Umdrehungsgebers auf Sensorleitungsbruch und eine Schaltungsanordnung zur Durchführung dieses Verfahrens anzugeben.

Diese Aufgabe wird erfindungsgemäß dadurch gelöst, daß jeweils während einer Umdrehung des Umdrehungsgebers jedes der n Impulssignale dahingehend überwacht wird, ob jedes Impulssignal jeweils außer in seinem korrespondierenden Sektor auch noch in einem oder mehreren der verbleibenden n − 1 Sektoren erzeugt wird.

Durch die Überwachung jedes Impulssignales und die Zuordnung der korrespondierenden Sektoren kann man feststellen, ob ein Impulssignal infolge einer Drehung des Umdrehungsgebers oder infolge eines Sensorleitungsbruches erzeugt wurde. Sobald ein Impulssignal in mehr als einem Sektor erzeugt wird, erfolgt die Ansteuerung einer Anzeige "Fehlimpuls". Eine kurzzeitige Ansteuerung bzw. Fehlmeldung kann für eine weitere Auswertung abgespeichert werden. Bei einer Fehlermeldung kann der Absolutweg nicht mehr einwandfrei ermittelt werden, wodurch die Steuerung eines mit diesem Umdrehungsgeber ausgerüsteten Spindelantriebes oder eines Roboters dementsprechend reagieren muß.

Bei einer Schaltungsanordnung zur Durchführung des Verfahrens mit einem aus n Impulsdrahtsensoren bestehenden, starr mit einem Lagegeber verbundenen Umdrehungsgeber, wobei jeder Impulsdrahtsensor pro Umdrehung ein Impulssignal und der Lagegeber pro Umdrehung n Sektorsignale erzeugen, ist jedes Impulssignal einem ersten Eingang eines UND-Gatters zugeführt, wobei jeweils dessen zweiter Eingang mit einem Ausgang eines Inverters verknüpft ist, an dessen Eingang ein korrespondierendes Sektorsignal ansteht, und sind die Ausgänge der n UND-Gatter jeweils mit einem Eingang eines nachfolgenden ODER-Gatters verknüpft, dessen Ausgang mit einer Anzeige "Fehlimpuls" verbunden ist.

Durch den Aufbau dieser Schaltungsanordnung kann man mit wenigen und einfachen Gattern jedes Impulssignal der n Impulsdrahtsensoren des Umdrehungsgebers überwachen. Dabei wird jedes Impulssignal

2

sektorweise überwacht, wobei jedes Impulssignal einem korrespondierenden Sektor zugewiesen ist. Erst wenn ein Impulssignal außer in seinem korrespondierenden Sektor auch noch in einem oder mehreren der verbleibenden n − 1 Sektoren erzeugt wird, erfolgt die Ansteuerung der Anzeige "Fehlimpuls". Sobald ein Impulssignal in mehr als einem Sektor erzeugt wird, kann man daraus schließen, daß bereits ein Sektorleitungsburch entstanden ist.

Somit kann man mit diesem Verfahren und mit dieser Schaltungsanordnung zur Durchführung dieses Verfahrens innerhalb einer Umdrehung des Umdrehungsgebers feststellen, ob an einem der n Impulsdrahtsensoren des Umdrehungsgebers ein Sensorleitungsbruch ansteht. Außerdem kann man auch erkennen, ob es sich dabei um einen kurzzeitigen Fehler, beispielsweise durch einen Wackelkontakt oder durch ein einstreuendes Fremdmagnetfeld, oder um einen längeren Fehler handelt, wobei bei einem länger anstehenden Fehler die Steuerung für den Antrieb bzw. für den Roboter, die mit dieser Einrichtung zur Absolutwegerfassung ausgestattet ist, entsprechend dem Fehler reagieren muß.

Zur weiteren Erläuterung der Erfindung wird auf die Zeichnung Bezug genommen, in der ein Ausführungsbeispiel nach der Erfindung schematisch veranschaulicht ist.

| FIG 1 | zeigt eine Einrichtung zur Absolutwegerfassung mit einer Schaltungsanordnung zur Durchführung des erfindungsgemäßen Verfahrens, in den |
| FIG 2 bis 4 | sind jeweils ein Sektorsignal in einem Diagramm über der Periode dargestellt, in den |
| FIG 5 bis 7 | sind jeweils ein Impulssignal in einem Diagramm über der Periode veranschaulicht und die |
| FIG 8 | zeigt ein Fehlersignal in einem Diagramm über der Periode. |

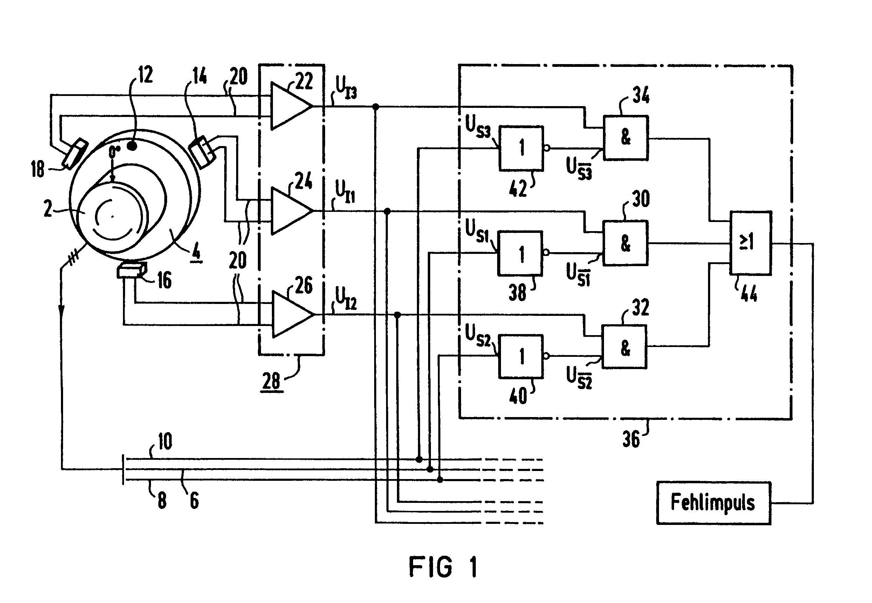

Die FIG 1 zeigt einen Lagegeber 2 und einen Umdrehungsgeber 4, die starr mechanisch miteinander verbunden sind. Der Lagegeber 2 möge beispielsweise als optischer Drehgeber ausgebildet sein, der demzufolge eine Vielzahl von binär kodierten optischen lesbaren Spuren aufweist, von denen drei Spuren dargestellt sind. Die erste Spur würde demzufolge innerhalb eines Winkelbereichs von 0° (durch einen Pfeil angedeutet) bis 120° ein Binärsignal logisch "1" und von 120° bis 360° ein Binärsignal logisch "0" führen, die zweite Spur würde von 0° bis 120° ein Binärsignal logisch "0", von 120° bis 240° ein Signal logisch "1" und von 240° bis 360° ein Signal logisch "0" und die dritte Spur würde von 0° bis 240° ein Signal logisch "0" und von 240° bis 360° ein Signal logisch "1" führen.

Die Ausgangssignale $U_{S1}$, $U_{S2}$ und $U_{S3}$ des Lagegebers 2, auch Sektorsignale genannt, werden auf Leitungen 6, 8 und 10 gegeben, die ein Leitungssystem bilden. Um die Anzahl der Leitungen 6 bis 10 zu vermindern, können die vom Lagegeber 2 erzeugten Signale in einer beliebigen Form kodiert werden.

Der Umdrehungsgeber 4 ist prinzipiell als eine Scheibe dargestellt, an der ein Magnet 12 befestigt ist, der während jeweils einer Umdrehung an drei Impulsdrahtsensoren 14, 16 und 18 vorbeistreicht und bei der Passage gegenüber jeweils einem der Impulsdrahtsensoren 14, 16 und 18 in diesen jeweils einen Spannungsstoß auslöst, der geschwindigkeitsunabhängig durch den Wiegand-Effekt erfolgt. Diese Spannungsstöße werden über zugehörige Leitungen 20 an Verstärkerschaltungen 22, 24 und 26 einer gestrichelt angedeuteten Impulsaufbereitungsschaltung 28 geleitet. Aus den Spannungsstößen wird damit jeweils ein zugeordneter, von nachgeschalteten UND-Gattern 30, 32 und 34 einer Schaltungsanordnung 36 zur Durchführung des Verfahrens verarbeitbare Impulssignale $U_{I1}$, $U_{I2}$ und $U_{I3}$ gewonnen, die an den jeweiligen Verstärkerschaltungen 22, 24 und 26 ausgangsseitig anliegen.

Die Schaltungsanordnung 36 enthält außerdem Inverter 38, 40 und 42 und ein ODER-Gatter 44. Das Impulssignal $U_{I1}$ bzw. $U_{I2}$ bzw. $U_{I3}$ ist dem ersten Eingang des UND-Gatters 30 bzw. 32 bzw. 34 zugeführt. Der zweite Eingang des UND-Gatters 30 bzw. 32 bzw. 34 ist mit einem Ausgang des Inverters 38 bzw. 40 bzw. 42 verknüpft. Dem Inverter 38 bzw. 40 bzw. 42 ist ein Sektorsignal $U_{S1}$ bzw. $U_{S2}$ bzw. $U_{S3}$, das vom Lagegeber 2 erzeugt ist, zugeführt. Dadurch steht am zweiten Eingang des UND-Gatters 30 bzw. 32 bzw. 34 das inverse Sektorsignal bzw. $U_{\overline{S1}}$ bzw. $U_{\overline{S2}}$ bzw. $U_{\overline{S3}}$ an. Der Ausgang des UND-Gatters 30 bzw. 32 bzw. 34 ist mit einem Eingang eines nachgeschalteten ODER-Gatters verknüpft, dessen Ausgang mit einem Eingang einer Anzeige "Fehlimpuls" verbunden ist.

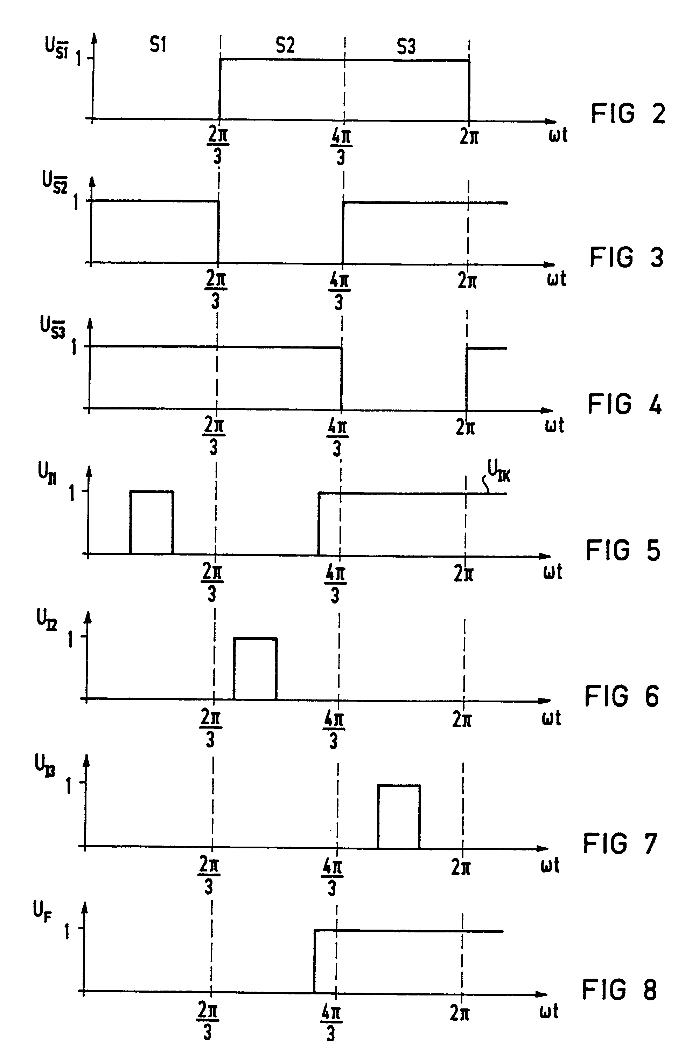

Die Funktionsweise der Schaltungsanordnung 36 zur Durchführung des Verfahren zur Überwachung der Impulsdrahtsensoren 14, 16 und 18 des Umdrehungsgebers 4 auf Sensorleitungsbruch wird anhand der FIG 2 bis 8 näher erläutert.

Bei einer vollen Umdrehung des Umdrehungsgebers 4 im Uhrzeigersinn erhält man an den Ausgängen der Verstärker 22, 24 und 26 der Impulsaufbereitungsschaltung 28 nacheinander folgende Impulssignale $U_{I1}$, $U_{I2}$ und $U_{I3}$, die in den FIG 5 bis 7 in einem Diagramm über der Periode 2 aufgetragen sind. Das Impulssignal $U_{I1}$ bzw. $U_{I2}$ bzw. $U_{I3}$ ist im Sektor S1 bzw. S2 bzw. S3 angeordnet. Als Kennzeichnung der Sektoren S1, S2 und S3 liefert der Lagegeber 2 folgende Sektorsignale $U_{S1}$, $U_{S2}$ und $U_{S3}$, die mittels der Inverter 38, 40 und 42 in inverse Sektorsignale $U_{\overline{S1}}$, $U_{\overline{S2}}$ und $U_{\overline{S3}}$ umgewandelt werden. Diese inversen Sektorsignale $U_{\overline{S1}}$, $U_{\overline{S2}}$ und $U_{\overline{S3}}$

sind in den FIG 2 bis 4 in einem Diagramm über der Periode 2 aufgetragen.

Das UND-Gatter 30 bzw. 32 bzw. 34 vergleicht das Impulssignal $U_{I1}$ bzw. $U_{I2}$ bzw. $U_{I3}$ mit dem inversen Sektorsignal $U_{\overline{S1}}$ bzw. $U_{\overline{S2}}$ bzw. $U_{\overline{S3}}$. Solange das Impulssignal $U_{I1}$ bzw. $U_{I2}$ bzw. $U_{I3}$ nur im Sektor S1 bzw. S2 bzw. S3 — kodiert durch das inverse Sektorsignal $U_{\overline{S1}}$ bzw. $U_{S2}$ bzw. $U_{S3}$ — erzeugt wird, erscheint am Ausgang des UND-Gattes 30 bzw. 32 bzw. 34 ein Signal logisch "0", wodurch am Ausgang des nachgeschalteten ODER-Gatters 44 keine Fehlermeldung erzeugt wird.

Wenn nun der Impulsdrahtsensor 14 außer einem Impulssignal $U_{I1}$ noch ein zusätzliches Impulssignal $U_{IK}$ infolge eines Wackelkontaktes oder einer Einstreuung eines Fremdmagnetfeldes erzeugt, das nicht im korrespondierenden Sektor S1 erzeugt wird, ändert sich das Ausgangssignal des UND-Gatters 30 von einem Signal logisch "0" in ein Signal logisch "1". Dadurch erscheint am Ausgang des ODER-Gatters 44 ein Fehlersignal $U_F$, das die Anzeige "Fehlimpuls" ansteuert.

Somit wird mit dieser Schaltungsanordnung 36 jeder Impulsdrahtsensor 14, 16 und 18 des Umdrehungsgebers 2 auf Leitungsbruch oder Einstreuung eines Fremdmagnetfeldes überwacht, wobei die Überwachung pro Umdrehung gemacht wird. D.h. die Schaltungsanordnung 36 kann pro Umdrehung feststellen, ob der Impulsdrahtsensor 14 bzw. 16 bzw. 18 außer ein reguläres Impulssignal $U_{I1}$ bzw. $U_{I2}$ bzw. $U_{I3}$ im korrespondierenden Sektor S1 bzw. S2 bzw. S3 oder auch noch ein zusätzliches Impulssignal $U_{IK}$ in den verbleibenden n − 1 bzw. zwei Sektoren erzeugt. Da die Überwachung pro Umdrehung vorgenommen wird, kann mit Hilfe dieser Schaltungsanordnung 36 innerhalb einer Umdrehung überprüft werden, ob alle notwendigen Signale zur Absolutwegerfassung erzeugt sind. Bei einem Fehlimpuls kann der Absolutweg mit Hilfe des Umdrehungsgebers 4 und des Lagegebers 2 nicht mehr eindeutig bestimmt werden, wodurch die Steuerungen dieser mit diesem Geber ausgerüsteten Geräte dementsprechend handeln müssen.

## Patentansprüche

1. Verfahren zur Überwachung eines aus n Impulsdrahtsensoren (14, 16, 18) bestehenden, starr mit einem Lagegeber (2) verbundenen Umdrehungsgebers (4) auf Sensorleitungsbruch, wobei jeder Impulsdrahtsensor (14, 16, 18) pro Umdrehung ein Impulssignal ($U_{I1}$,..., $U_{In}$) und der Lagegeber (2) pro Umdrehung n Sektorsignale erzeugen, wobei jedes Sektorsignal ($U_{S1}$,..., $U_{Sn}$) einen der n Sektoren (S1,..., Sn) einer Umdrehung kodiert, **dadurch gekennzeichnet**, daß jeweils während einer Umdrehung des Umdrehungsgebers (4) jedes der n Impulssignale ($U_{I1}$,..., $U_{In}$) dahingehend überwacht wird, ob jedes Impulssignal ($U_{I1}$,..., $U_{In}$) jeweils außer in seinem korrespondierenden Sektor (S1,..., Sn) auch noch in einem oder in mehreren der verbleibenden n − 1 Sektoren (S1,..., Sn − 1) erzeugt wird.

2. Schaltungsanordnung (36) zur Durchführung des Verfahrens nach Anspruch 1 mit einem aus n Impulsdrahtsensoren (14,16, 18) bestehenden, starr mit einem Lagegeber (2) verbundenen Umdrehungsgeber (4), wobei jeder Impulsdrahtsensor (14, 16, 18) pro Umdrehung ein Impulssignal ($U_{I1}$,..., $U_{In}$) und der Lagegeber (4) pro Umdrehung n Sektorsignale ($U_{S1}$,..., $U_{Sn}$) erzeugen, **dadurch gekennzeichnet**, daß jedes Impulssignal ($U_{I1}$, $U_{I2}$,..., $U_{I3}$) einem ersten Eingang eines UND-Gatters (30, 32, 34) zugeführt ist, wobei jeweils dessen zweiter Eingang mit einem Ausgang eines Inverters (38, 40, 42) verknüpft ist, an dessen Eingang ein korrespondierendes Sektorsignal ($U_{S1}$, $U_{S2}$, $U_{S3}$) ansteht, und daß die Ausgänge der n UND-Gatter (30, 32, 34) jeweils mit einem Eingang eines nachfolgenden ODER-Gatters (44) verknüpft sind, dessen Ausgang mit einer Anzeige "Fehlimpuls" verbunden ist.

## Claims

1. A method for monitoring a rotation sensor (4), rigidly connected to a position sensor (2) and consisting of n pulse wire sensors (14, 16, 18), on a sensor open-circuit, wherein each pulse wire sensor (14, 16, 18) generates per revolution a pulse signal ($U_{I1}$,..., $U_{In}$) and the position sensor (2) generates per revolution n sector signals, wherein each sector signal ($U_{S1}$,..., $U_{Sn}$) codes one of the n sectors (S1,..., Sn) of a revolution, characterised in that in each case during one revolution of the rotation sensor (4) monitoring each of the n pulse signals ($U_{I1}$,..., $U_{In}$) occurs to see whether each pulse signal ($U_{I1}$,..., $U_{In}$) is respectively generated except in its corresponding sector (S1,..., Sn) or in one or more of the remaining n − 1 sectors (S1,..., Sn − 1).

2. A circuit arrangement (36) for carrying out the method according to claim 1 with a rotation sensor (4), rigidly connected to a position sensor (2) and consisting of n pulse wire sensors (14, 16, 18), wherein each pulse wire sensor (14, 16, 18) generates per revolution a pulse signal ($U_{I1}$,..., $U_{In}$) and the position sensor (4) generates per revolution n sector signals ($U_{S1}$,..., $U_{Sn}$), characterised in that each pulse signal ($U_{I1}$, $U_{I2}$, $U_{I3}$) is supplied to a first input of an AND-gate (30, 32, 34), wherein in each case its second input is linked to an output of an invertor (38, 40, 42), at the input of which there is provided a corresponding sector signal ($U_{S1}$, $U_{S2}$, $U_{S3}$), and in that the outputs of the n AND-gates (30, 32, 34) in each case are connected to an input of a subsequent OR-gate (44), the output of which is connected to an indicator "error pulse".

## Revendications

1. Procédé pour contrôler la rupture éventuelle d'une ligne d'un capteur dans un détecteur tachymétrique (4) constitué par n capteurs à impulsions (14, 16, 18) raccordé par des fils et relié rigidement à un capteur de position (2), selon lequel chaque capteur à impulsions (14, 16, 18) raccordé à un fil produit, lors de chaque rotation, un signal impulsionnel ($U_{l1}$,...., $U_{ln}$) et le capteur de position (2) produit, lors de chaque rotation, n signaux de secteurs, chacun de ces signaux de secteurs ($U_{S1}$,..., $U_{Sn}$) codant l'un des n secteurs (S1,..., Sn) d'une rotation, caractérisé par le fait que respectivement pendant une rotation du détecteur tachymétrique (4), on contrôle chacun des n signaux impulsionnels ($U_{l1}$,...., $U_{ln}$) pour déterminer si chaque signal impulsionnel ($U_{l1}$,...., $U_{ln}$) est produit non seulement respectivement en dehors de son secteur correspondant (S1,..., Sn), mais en outre également dans un ou plusieurs des (n – 1) autres secteurs (S1,..., Sn – 1).

2. Montage (36) pour la mise en oeuvre du procédé selon la revendication 1, comportant un détecteur tachymétrique (4) constitué par n capteurs à impulsions (14, 16, 18) raccordés par des fils et relié rigidement à un capteur de position (2), selon lequel chaque capteur à impulsions (14, 16, 18) raccordé à un fil produit, lors de chaque rotation, un signal impulsionnel ($U_{l1}$,...., $U_{ln}$) et le capteur de position (2) produit, lors de chaque rotation, n signaux de secteurs ($U_{S1}$,..., $U_{Sn}$), caractérisé par le fait que chaque signal impulsionnel ($U_{l1}$, $U_{l2}$, $U_{l3}$) est envoyé à une première entrée d'une porte ET (30, 32, 34), dont la seconde entrée respective est raccordée à une sortie d'un inverseur (38, 40, 42), à l'entrée duquel est appliqué un signal de secteur correspondant ($U_{S1}$, $U_{S2}$, $U_{S3}$), et que les sorties des n portes ET (30, 32, 34) sont combinées respectivement à une autre entrée d'une porte OU (44) branchée en aval et dont la sortie est raccordée à un dispositif d'affichage "impulsion manquante".

FIG 1

Fehlimpuls

FIG 2

FIG 3

FIG 4

FIG 5

FIG 6

FIG 7

FIG 8